# EUROPÄISCHE PATENTSCHRIFT

(11) **EP 2 522 485 B1**
(45) Veröffentlichungstag und Bekanntmachung des Hinweises auf die Patenterteilung: **13.01.2016**
(21) Anmeldenummer: 12167263.8
(22) Anmeldetag: 09.05.2012
(51) Int. Cl.: B29C 49/62, B29C 49/46

(54) **Aseptische Blasformmaschine sowie -verfahren und Blasform mit steriler Luftabführung**
Aseptic blow moulding device and process as well as blow mould with sterile air extrusion
Machine et procédé de formage par soufflage aseptique avec évacuation stérile de l'air, ainsi que moule de soufflage

(30) Priorität: 11.05.2011 DE 102011101256
(43) Veröffentlichungstag der Anmeldung: 14.11.2012
(73) Patentinhaber: Krones AG, 93073 Neutraubling (DE)
(72) Erfinder: Geltinger, Florian, 93073 Neutraubling (DE); Neubauer, Michael, 93073 Neutraubling (DE); Söllner, Jürgen, 93073 Neutraubling (DE)
(74) Vertreter: Bittner, Bernhard

(56) Entgegenhaltungen:
- EP-A2- 0 976 517
- EP-A2- 2 283 991
- DE-U1- 20 023 423
- US-A- 4 026 982

## Beschreibung

Die vorliegende Erfindung bezieht sich auf eine Vorrichtung zum Umformen von Kunstoffvorformlingen zu Kunststoffbehältnissen. Derartige Vorrichtungen sind aus dem Stand der Technik seit langem bekannt. Dabei werden üblicherweise in einer Vielzahl von Blasstationen erwärmte Kunststoffvorformlinge durch Beaufschlagung mit Druckluft zu Kunststoffehältnissen umgeformt.

In jüngerer Zeit sind auch aseptische Blasformmaschinen bekannt geworden, bei denen der Umformungsvorgang Innerhalb eines Reinraums stattfindet Eine derartige Maschine ist aus der WO 2010 020529 A2 bekannt Diese Maschine weist einen Reinraum auf, in dem die einzelnen Blasstationen angeordnet sind. Vor Produktionsbeginn müssen dabei dieser Reinraum und darin befindliche Objekte sterilisiert werden. Dieser Sterilisationsvorgang umfasst dabel auch die gesamte Blasstation, d.h. die Blasformen, die Transfersterne, etwaige Blasdüsen und dergleichen.

Aus der EP 2 283 991 A2 ist eine Blasformmaschine bekannt, bei der der Umformungsvorgang eines Kunststoffvorformlings zu einem Behältnis innerhalb eines Reinraums stattfindet. Zudem ist eine Reinigungseinrichtung zur Reinigung von Bereichen der Blasform vorgesehen, die wenigstens eine Austrittsöffnung für ein Reinigungsmedium aufweist.

Dabei ist aus dem internen Stand der Technik der Anmelderin auch bekannt, dass die Blasformen an ihrer Innenwandung kleine Öffnungen aufweisen können, um während des Blasvorgangs ein gasförmiges Medium, wie beispielsweise verdrängte Luft, abführen zu können. Die Sterilisation dieser Öffnungen stellt jedoch ein erhebliches Problem dar. Des Weiteren kann durch diese Öffnungen im Stand der Technik eine Kontamination der Blasformen verursacht werden.

Beim Bau einer aseptischen Streckblasmaschine ist die Sterilisation des Reinraums und der darin befindlichen Teile entscheidend. Nur durch zuverlässige Sterilisation kann eine keimfreie Atmosphäre erreicht werden, die für die aseptische Herstellung von Behältern und die Abfüllung von Getränken bedeutsam ist.

Der vorliegenden Erfindung liegt daher die Aufgabe zugrunde, eine verbesserte Möglichkeit zu schaffen, um die Sterilität in einem derartigen Reinraum bzw. in einer derartigen Blasmaschine aufrecht zu erhalten. Dies wird erfindungsgemäß durch die unabhängigen Ansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist wenigstens eine Blasform mit mindestens zwei bezüglich einander bewegbaren Blasformteilen auf. Diese Blasformteile bilden dabei einen Hohlraum aus, innerhalb dessen die Kunststoffvorformlinge zu den Kunststoffbehältnissen umformbar sind. Weiterhin weist die Vorrichtung eine Beaufschlagungsvorrichtung auf, welche die Kunststoffvorformlinge zu deren Expansion mit einem fließfähigen Medium beaufschlagt sowie eine Transporteinrichtung, welche die Blasform entlang eines vorgegebenen Transportpfades transportiert. Weiterhin weist die Vorrichtung einen Reinraum auf, innerhalb dessen die Blasform während der Expansion der Kunststoffvorformlinge transportierbar ist, wobei dieser Reinraum mittels wenigstens einer Wandung gegenüber einer unsterilen Umgebung abgegrenzt ist. Die Blasform weist dabei an einer den Kunststoffvorformlingen zugewandten Innenwandung wenigstens eine Öffnung auf, durch welche während des Expansionsvorgangs ein fließfähiges Medium aus dem Hohlraum abführbar ist.

Erfindungsgemäß ist eine Strömungsverbindung zwischen dieser Öffnung und dem Reinraum vorgesehen und diese Strömungsverbindung ist gegenüber der unsterilen Umgebung des Reinraums abgedichtet.

Es wird daher vorgeschlagen, dass über die besagten Öffnungen innerhalb der Blasform während des Expansionsvorgangs ein gasförmiges Medium ausschließlich in den Reinraum abgeführt wird und nicht in die unsterile Umgebung. Auf diese Weise kann umgekehrt eine Re-Kontamination des Reinraums durch die unsterile Umgebung verhindert werden.

Bei einer vorteilhaften Ausführungsform weist die Vorrichtung eine Vielzahl von Blasformen bzw. Blasstationen auf. Genauer gesagt kann eine Vielzahl von Blasstationen vorgesehen sein, welche jeweils Blasformträger und an diesen Blasformträgern angeordnete Blasformen aufweisen können. Vorteilhaft handelt es sich bei der Transporteinrichtung um ein Blasrad, an dem eine Vielzahl von Blasstationen angeordnet ist. Bei einer weiteren vorteilhaften Ausführungsform ist der Reinraum bzw. Sterilraum kanalförmig um den Transportpfad der einzelnen Blasstationen ausgebildet.

Dabei ist es möglich, dass die einzelnen Träger mit den daran angeordneten Blasformen auseinanderklappbar sind, um in einem geöffneten Zustand die Kunststoffvorformlinge aufnehmen zu können.

Vorteilhaft sind an der Innenwandung der Blasformen eine Vielzahl der oben erwähnten Öffnungen angeordnet, um gleichmäßig die während des Expansionsvorgangs durch die entstehende Flasche verdrängte Luft, aufnehmen zu können. Bei einer weiteren vorteilhaften Ausführungsform ist der Reinraum wenigstens teilweise auch durch die Transporteinrichtung selbst ausgebildet.

Bei einer weiteren vorteilhaften Ausführungsform weist die Vorrichtung eine Zuführleitung auf, um der Blasform ein fließfähiges Sterilisationsmedium zuzuführen, wobei wenigstens zeitweise eine Strömungsverbindung zwischen der Zuführleitung und der besagten Öffnung besteht. Über diese Zuführleitung können auch die Blasformen sterilisiert werden. Bei dem Sterilisationsmittel handelt es sich insbesondere um H₂O₂, es wäre jedoch auch möglich, beispielsweise Peressigsäure oder andere Sterilisationsmittel zu verwenden. Dabei ist es möglich, dass dieses Sterilisationsmittel über die besagten Bohrungen in den Hohlraum gelangt.

Vorteilhaft wird die besagte Verbindung zwischen einem Reservoir für das Sterilisationsmedium und den zu sterilisierenden Bauteilen zeitweise zum Zwecke der Sterilisation hergestellt. Dies kann auf unterschiedliche Arten erfolgen. So wäre es beispielsweise möglich, eine Beaufschlagungseinrichtung, wie einen Blaskolben oder eine Blasdüse zum Einbringen des Sterilisationsmediums zu benutzen. Dabei kann auch die Blasdüse selbst sterilisiert werden. Weiterhin wäre es möglich, dass ein Sterilisationsgas aus der Blasdüse in den Isolator bzw. Reinraum entweicht und diesen sterilisiert. Zur Sterilisation von schwer erreichbaren Stellen wie beispielsweise den oben erwähnten Öffnungen bzw. Entlüftungsbohrungen in den Blasformen wäre es auch möglich, die Blasdüse auf die Blasformen aufzusetzen und das Sterilisationsmittel direkt in die Blasformen einzublasen.

Bei einer weiteren vorteilhaften Ausführungsform weist daher die Vorrichtung eine Bevorratungseinrichtung zum Bevorraten des fließfähigen Sterilisationsmediums auf und diese Bevorratungseinrichtung steht wenigstens zeitweise in Strömungsverbindung mit der oben erwähnten Öffnung (der Blasform). Auf diese Weise kann das Sterilisationsmedium über die Öffnung in die Blasform austreten.

Bei einer weiteren vorteilhaften Ausführungsform verläuft die Strömungsverbindung wenigstens abschnittsweise über die Beaufschlagungseinrichtung. So ist es möglich, dass das Sterilisationsmittel ausgehend von der Beaufschlagungseinrichtung wie einer Blasdüse der Blasform zugeführt wird. Dies wird genauer unter Bezugnahme auf die Figuren erläutert.

Bei einer weiteren vorteilhaften Ausführungsform weist die Vorrichtung ein gegenüber der Blasform bewegliches Umleitelement auf, welches das Sterilisationsmedium in einen Sterilisationsbetrieb zu der Öffnung leitet. So ist es möglich, dass zur besseren Sterilisation der eventuell vorhandenen Entlüftungsbohrungen in den Blasformen ein zusätzliches Element, wie beispielsweise eine sogenannte SIP-Kappe benutzt wird. Dieses Bauteil kann dabei zwischen die Blasform bzw. die Blasformteile und die Blasdüse eingebracht werden. Anschließend ist es möglich, dass die Beaufschlagungseinrichtung bzw. die Blasdüse nach unten fährt und das Sterilisationsmittel in die besagte SIP-Kappe einbläst. Durch die spezielle Gestaltung kann die SIP-Kappe dann das durch die Blasdüse eingebrachte Sterilisationsmittel direkt in die Entlüftungsbohrungen der Blasformen einleiten. Dies bewirkt eine gute Durchspülung der Bohrungen mit Sterilisationsmittel und somit eine gute Sterilisation. Es sind jedoch auch andere Ausführungsformen der SIP-Kappe denkbar.

Weiterhin wäre es auch möglich, auf die besagte SIP- oder CIP-Kappe zu verzichten. Falls beispielsweise die Beaufschlagungseinrichtung bzw. Blasdüse das Sterilisationsmittel direkt in die Blasformen einbläst, wird ein Großteil des Sterilisationsmediums über einen Formspalt (dessen Größe üblicherweise im Bereich von 2/10 mm liegt) zwischen den beiden Formhälften entweichen, statt den Weg durch die Entlüftungsbohrungen zu wählen. Dieses Problem kann gelöst werden durch eine Vorrichtung, die es ermöglicht, den Formspalt während der Sterilisation soweit wie möglich zu verkleinern und danach für die Produktion wieder auf das benötigte Maß von ca. 0,2 mm zu bringen. Dieser Abstand von ca. 0,2 mm ist vorteilhaft, damit beim Expandieren der Behältnisse die Luft zwischen dem Behältnis und der Blasform aus der Form entweichen kann.

Weiterhin wäre es auch möglich, das Sterilisationsmittel über ein eigens zu diesem Zweck bestimmtes Bauteil, wie etwa einen sogenannten SIP-Kolben, durchzuführen. Dieser kann beweglich ausgeführt sein und zum Sterilisieren an das zu sterilisierende Bauteil andocken. Dies können dann ebenfalls die Blasformen sein. Die eigentliche Sterilisation kann dann ähnlich erfolgen wie oben beschrieben.

Bei einer weiteren vorteilhaften Ausführungsform weist die Blasform wenigstens einen Kanal zum Leiten des fließfähigen Mediums und/oder des Sterilisationsmediums auf, wobei dieser Kanal in Strömungsverbindung mit der Öffnung steht und sich der Kanal in einer Längsrichtung der Blasform erstreckt. Vorteilhaft ist dabei dieser Kanal in einer Innenwandung der Blasform ausgebildet. Besonders bevorzugt ist der besagte Kanal vollständig in der besagten Innenwandung ausgebildet. Weiterhin ist es auch möglich, dass dieser Kanal in Strömungsverbindung mit dem Reinraum steht.

Die vorliegende Erfindung Ist weiterhin auf eine Blasform zum Umformen von Kunststoffvorformlingen zu Kunststoffbehältnissen gerichtet. Diese Blasform weist wenigstens ein erstes Blasformteil und ein zweites Blasformteil auf, wobei diese beiden Blasformteile bezüglich einander schwenkbar sind und die Blasformteile einen Hohlraum ausbilden, innerhalb dessen die Kunststoffvorformlinge durch Beaufschlagung mit einem gasförmigen Medium zu den Kunststoffbehältnissen expandierbar sind. Weiterhin weist die Blasform bzw. weisen die Blasformteile in einer den Kunststoffvorformlingen zugewandten Wandung der Blasform wenigstens eine Öffnung auf, um während des Expansionsvorgangs ein gasförmiges Medium abzuführen und/oder um während des Sterilisationsvorgangs der Blasform ein fließfähiges Sterilisationsmedium zuzuführen. Vorteilhaft steht diese Öffnung in Strömungsverbindung mit einem innerhalb einer Wandung der Blasform bzw. der Blasformteile verlaufenden Kanal und dieser Kanal erstreckt sich wenigstens abstandsweise in einer Längsrichtung der Blasform.

Es wird daher auch hinsichtlich der Blasform vorgeschlagen, dass diese in ihrem Inneren einen Kanal aufweist, der insbesondere zum Abführen von Luft aus der geschlossenen Blasform dienen kann, gegebenenfalls jedoch auch zur Zuführung eines Sterilisationsmediums.

Im Stand der Technik sind zwar die besagten Öffnungen in der Innenwandung der Blasformen bekannt, die sich an diese Öffnung anschließenden Kanäle erstrecken sich jedoch üblicherweise in radialer Richtung, was aus fertigungstechnischen Gründen einfacher ist, als die hier vorgeschlagene Vorgehensweise. Mit der hier vorgeschlagenen Vorgehensweise ist es jedoch auch möglich, das gasförmige Medium, d.h. insbesondere die Blasluft, in der Längsrichtung des Behältnisses in den Reinraum zu führen.

Bei einer vorteilhaften Ausführungsform steht der innerhalb der Wandung verlaufende Kanal über einen Verbindungskanal mit der Öffnung in Strömungsverbindung. Dieser Verbindungskanal kann dabei auch in einer radialen Richtung der Blasform verlaufen.

Vorteilhaft steht der besagte Kanal mit mehreren der oben genannten Öffnungen in Strömungsverbindung. Dabei können diese Öffnungen beispielsweise in der Längsrichtung der Blasform übereinander angeordnet sein. Weiterhin wäre es auch möglich, dass eine Vielzahl der genannten Kanäle innerhalb der Wandung der Blasform bzw. der Blasformteile ausgebildet sind.

Die vorliegende Erfindung ist weiterhin auf ein Verfahren zum Umformen von Kunststoffvorformlingen zu Kunststoffbehältnissen gerichtet, wobei die Kunststoffvorformlinge in einer Vielzahl von Blasstationen bzw. Blasformen zu den Kunststoffbehältnissen umgeformt werden und die Blasformen mittels einer Transporteinrichtung zumindest teilweise während ihrer Expansion entlang eines vorgegebenen Transportpfades innerhalb eines Reinraums transportiert werden, wobei wenigstens zeitweise während des Expansionsvorgangs ein gasförmiges Medium über eine in einer den Kunststoffvorformlingen zugewandten Wandung der Blasform angeordnete Öffnung abgeführt wird und/oder wenigstens zeitweise während eines Sterilisationsvorgangs ein fließfähiges Medium über die den Kunststoffvorformlingen zugewandte Öffnung der Blasform zugeführt wird.

Erfindungsgemäß gelangt das gasförmige Medium ausgehend von der Öffnung ausschließlich in den Reinraum.

Es wird daher auch verfahrensseitig vorgeschlagen, dass das gasförmige Medium, wie beispielsweise die Blasluft oder innerhalb der Blasform befindliche Luft, die über die Öffnungen abgeführt wird, dabei jedoch nicht in die Umgebung gelangt, sondern lediglich in den Reinraum. Auf diese Weise wird auch verfahrensseitig das Sterilhalten der einzelnen Blasstationen und auch des Reinrauminneren erleichtert.

Weitere Vorteile und Ausführungsformen ergeben sich aus den beigefügten Zeichnungen:
Darin zeigen:
   - Fig. 1: eine schematische Darstellung einer Anlage zum Herstellen von Kunststoffbehältnissen;
   - Fig. 2: eine Ansicht eines Reinraums im Bereich einer Blasstation;
   - Fig. 3: eine Darstellung einer erfindungsgemäßen Blasform, die an einem Träger angeordnet ist;
   - Fig. 4: eine Darstellung einer in einem Blasformträger angeordneten Blasform
   - Fig. 5: eine Darstellung einer geöffneten Blasstation mit Sicht auf die Blasform;
   - Fig. 6: eine Darstellung zur Veranschaulichung eines Sterilisationsmittelverlaufs;
   - Fig. 7: eine Detaildarstellung einer Blasform.

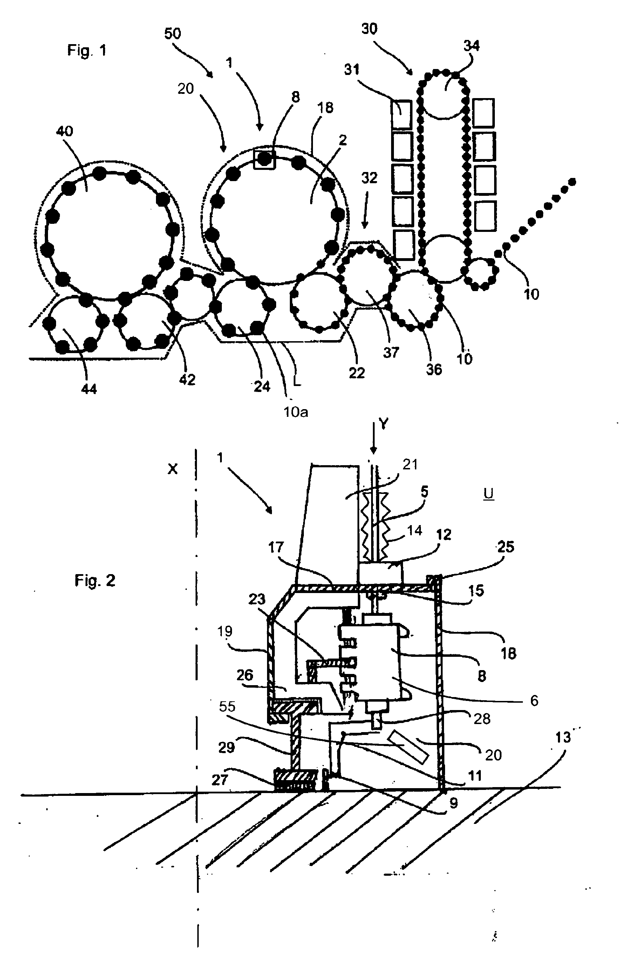

Figur 1 zeigt eine schematische Darstellung einer Anlage zum Herstellen von Kunststoffbehältnissen nach dem Stand der Technik. Diese Anlage 50 weist eine Heizeinrichtung 30 auf, in der Kunststoffvorformlinge 10 erwärmt werden. Dabei werden diese Kunststoffvorformlinge 10 mittels einer Transporteinrichtung 34, wie hier einer umlaufenden Kette, durch diese Heizeinrichtung 30 geführt und dabei mit einer Vielzahl von Heizelementen 31 erwärmt. An diese Heizeinrichtung 30 schließt sich eine Übergabeeinheit 36 an, welche die Vorformlinge 10 an eine Sterilisationseinrichtung 32 übergibt. Diese Sterilisationseinrichtung 32 weist dabei hier ebenfalls ein Transportrad 37 auf und an diesem Transportrad 37 oder auch stationär können Sterilisationselemente angeordnet sein. In diesem Bereich ist beispielsweise eine Sterilisation durch Wasserstoffperoxidgas oder auch durch elektromagnetische Strahlung möglich. Insbesondere wird in diesem Bereich eine Innensterilisation der Vorformlinge durchgeführt.

Das Bezugszeichen 20 bezeichnet in seiner Gesamtheit einen Reinraum, dessen Außenbegrenzungen hier durch die punktierte Linie L angedeutet sind. In einer weiteren bevorzugten Ausführungsform ist der Reinraum 20 nicht nur im Bereich des Transportrads 2 und Befüllungseinrichtung 40 angeordnet, sondern beginnt möglicherweise schon im Bereich der Heizeinrichtung 30, der Sterilisationseinrichtung 32, der Kunststoffvorformlingzuführung und/oder der Kunststoffvorformlingherstellung. Man erkennt, dass dieser Reinraum 20 in dem Bereich der Sterilisationseinheit 32 beginnt. In diesem Bereich können Schleuseneinrichtungen vorgesehen sein, um die Kunststoffvorformlinge in den Reinraum 20 einzuführen, ohne dass dabei zu viel Gas innerhalb des Reinraums strömt und so verloren geht.

Der Reinraum ist, wie durch die gestrichelte Linie L angedeutet, an die Außengestalt der einzelnen Anlagenkomponenten angepasst. Auf diese Weise kann das Volumen des Reinraums reduziert werden.

Das Bezugszeichen 1 bezeichnet in ihrer Gesamtheit eine Umformungsvorrichtung, bei der an einem Transportrad 2 eine Vielzahl von Blasstationen bzw. Umformungsstationen 8 angeordnet ist, wobei hier lediglich einer dieser Blasstationen 8 dargestellt ist. Mit diesen Blasstationen 8 werden die Kunststoffvorformlinge 10 zu Behältnissen 10a expandiert. Obwohl hier nicht detailliert gezeigt, befindet sich nicht der gesamte Bereich des Transporteinrichtung 2 innerhalb des Reinraums 20, sondern der Reinraum 20 bzw. Isolator ist gewissermaßen als Mini-Isolator innerhalb der gesamten Vorrichtung realisiert. So wäre es möglich, dass der Reinraum zumindest im Bereich der Umformungsvorrichtung 1 kanalartig ausgeführt ist.

Das Bezugszeichen 22 bezieht sich auf eine Zuführeinrichtung, welche die Vorformlinge an die Umformungseinrichtung 1 übergibt und das Bezugszeichen 24 auf eine Abführeinrichtung, welche die hergestellten Kunststoffbehältnisse 20 von der Umformungsvorrichtung 1 abführt. Man erkennt, dass der Reinraum 20 in dem Bereich der Zuführeinrichtung 22 und der Abführeinrichtung 24 jeweils Ausnehmungen aufweist, welche diese Einrichtungen 22, 24 aufnehmen. Auf diese Weise kann in besonders vorteilhafter Weise eine Übergabe der Kunststoffvorformlinge 10 an die Umformungsvorrichtung 1 bzw. eine Übernahme der Kunststoffbehältnisse 10a von der Umformungsvorrichtung 1 erreicht werden.

Mit einer Übergabeeinheit 42 werden die expandierten Kunststoffbehältnisse an eine Befüllungseinrichtung 40 übergeben und von dieser Befüllungseinrichtung 40 anschließend über eine weitere Transporteinheit 44 abgeführt. Dabei befindet sich auch die Befüllungseinrichtung 40 innerhalb des besagten Reinraums 20. Auch im Falle der Befüllungseinrichtung wäre es möglich, dass nicht die gesamte Befüllungseinrichtung 40 mit beispielsweise einem Reservoir für ein Getränk vollständig innerhalb des Reinraums 20 angeordnet sind, sondern auch hier lediglich diejenigen Bereiche, in denen tatsächlich die Behältnisse geführt werden. Insoweit könnte auch die Befüllungseinrichtung in ähnlicher Weise aufgebaut sein wie die Vorrichtung 1 zum Umformen von Kunststoffvorformlingen 10.

Wie erwähnt, ist der Reinraum 20 im Bereich der Vorrichtung 1 auf einen geringst möglichen Bereich reduziert, nämlich im Wesentlichen auf die Blasstationen 8 selbst. Durch diese kleinbauende Gestaltung des Reinraums 20 ist es leichter und schneller möglich, einen Reinraum überhaupt herzustellen und auch die Sterilhaltung in der Betriebsphase ist weniger aufwändig. Auch wird weniger Sterilluft benötigt, was zu kleineren Filteranlagen führt und auch die Gefahr von unkontrollierter Wirbelbildung wird reduziert.

Figur 2 zeigt eine Detaildarstellung der Vorrichtung 1 nach dem Stand der Technik im Bereich einer Blasstation 8. Eine Vielzahl derartiger Blasstationen 8 wird mit einer Transporteinrichtung 2 bzw. einem Träger drehend um eine Achse X bewegt. Die Blasstation 8 ist, wie in Figur 2 ersichtlich, innerhalb des Reinraums 20, der hier kanalartig ausgebildet ist, geführt. Dieser Reinraum 20 wird abgeschlossen durch eine bewegliche Seitenwand 19 und einen einteilig mit dieser Seitenwand 19 ausgebildeten Deckel 17. Diese Seitenwand 19 und der Deckel 17 drehen dabei mit der Blasstation 8 mit.

Das Bezugszeichen 18 bezieht sich auf eine weitere Wandung, welche den Reinraum 20 begrenzt. Diese Wandung 18 ist hier eine außen liegende Wandung, welche stationär angeordnet ist. Zwischen dem Deckel 17 und der Wandung 18 ist eine Dichtungseinrichtung 25 vorgesehen, welche die gegeneinander beweglichen Elemente 17 und 18 gegeneinander abdichtet, beispielsweise, wie oben erwähnt, unter Verwendung eines Wasserschlosses. Der untere Bereich der Wandung 18 ist fest und abdichtend an einem Boden 13 angeordnet. Innerhalb des Reinraums 20 und hier unmittelbar an der Wandung 19 anliegend ist ein Träger 26 vorgesehen, der sich ebenfalls drehend bewegt und an dem wiederum eine Halteeinrichtung 23 vorgesehen ist, welche die Blasstation 8 hält.

Das Bezugszeichen 11 bezieht sich auf eine Folgeeinrichtung, welche von einer Führungskurve 9 betätigt werden kann, um die Blasstation auf ihrem Weg durch den Reinraum 20 zu öffnen und zu schließen, um insbesondere den Kunststoffvorformling in die Blasstation einzulegen und um ihn auch wieder zu entnehmen. Dabei ist eine Führungskurve 9 auch innerhalb des Reinraums 20 angeordnet. Es wäre jedoch beispielsweise auch möglich, etwa bereits einen Abschnitt 11 unterhalb der einzelnen Blasstationen 8 aus dem Reinraum 20 herauszuführen.

Die Transporteinrichtung 2 kann noch weitere Elemente aufweisen, welche oberhalb des Reinraums 20 angeordnet sind.

Der Träger 26 ist dabei fest auf einem Haltekörper 29 angeordnet und dieser Haltekörper ist wiederum beweglich gegenüber dem Boden 13. Dabei bezieht sich das Bezugszeichen 27 auf eine weitere Dichtungseinrichtung, welche auch in diesem Bereich eine Abdichtung der gegeneinander beweglichen Bereiche 13 und 29 bewirkt.

Das Bezugszeichen 5 bezieht sich auf eine Reckstange, welche gegenüber der Blasstation beweglich ist, um die Kunststoffvorformlinge 10 in ihrer Längsrichtung zu recken. Dabei ist auf dem Deckel 17 hier ein Schlitten 12 angeordnet, demgegenüber die Reckstange in der Richtung Y beweglich ist. Das Bezugszeichen 21 bezieht sich auf eine weitere Halterung für diesen Schlitten 12 der Reckstange 5.

Man erkennt, dass bestimmte Bereiche der Reckstange während des Blasvorgangs sowohl außerhalb des Reinraums 20 als auch innerhalb des Reinraums 20 sind. Zu diesem Zweck ist es möglich, außerhalb des Reinraums 20 bzw. oberhalb des Schlittens 12 eine Schutzeinrichtung wie einen Faltenbalg 14 vorzusehen, der die Reckstange 5 umgibt, so dass kein Bereich der Reckstange 5 unmittelbar mit der Außenumgebung in Berührung kommt. Das Bezugszeichen U kennzeichnet die (unsterile) Umgebung des Reinraums 20. Das Bezugszeichen 28 kennzeichnet einen Träger zum Tragen einer Bodenform, welche ebenfalls einen Bestandteil der Blasform ausbildet. Dieser Träger ist dabei ebenfalls in der Richtung Y bewegbar.

Das Bezugszeichen 55 bezieht sich auf eine Sterilisationseinrichtung, welche hier bevorzugt im Inneren des Reinraums 20 angeordnet ist und zum Sterilisieren der einzelnen Umformungsstationen bzw. Bestandteilen dieser Umformungsstationen 8 dient. Diese Sterilisationseinrichtung 55 kann dabei die Umformungsstationen 8 beispielsweise mit Wasserstoffperoxid oder einem anderen Sterilisationsmittel beaufschlagen. Dabei kann die Sterilisationseinrichtung 55 stationär angeordnet sein und die Umformungsstationen können sich gegenüber dieser Sterilisationseinrichtung 55 bewegen. Diese Sterilisationseinrichtung bzw. Beaufschlagungseinrichtung 55 kann sich am Transportrad 2 oder an der stehenden Wandung 18 befinden oder generell stationär angeordnet sein und aus Düsen oder ähnlichem bestehen. Zudem ist es vorteilhaft, Sterilluft zum Sterilisieren des Reinraums 20 über das Lüftungssystem in den Reinraum 20 einzubringen.

Die (nicht gezeigten) Blasformen sind innerhalb der Blasformträger 6 angeordnet. Genauer können dabei zwei Blasformträgerteile angeordnet sein, die gegenüber einander schwenkbar sind und jeweils ein Blasformteil halten. Durch diesen Schwenkvorgang können die Blasformen zum Einbringen von Kunststoffvorformlingen und zum Entnehmen fertig geblasener Behältnisse geöffnet werden. Diese Blasformträger und Blasformen sind dabei ebenfalls innerhalb des Reinraums angeordnet.

Es wäre jedoch auch (anders als in Fig. 2 gezeigt) möglich und bevorzugt, dass die Transporteinrichtung 2 bzw. der Träger einen C-förmigen Außenumfang aufweist, der auch teilweise die Außenwandungen des Reinraums ausbildet. Damit dreht sich hier diese C - förmige Reinraumwand mit der Transporteinrichtung 2 d.h. dem Blasrad. Bei dieser Ausführungsform ist die untere Begrenzung des Reinraums von dem Boden 13 beabstandet und bewegt sich relativ zu dem Boden. Auf diese Weise kann der Reinraum noch kleiner gestaltet werden als in Fig.2 gezeigt. Eine Abdichtung dieses C- förmigen Profils der Transporteinrichtung, welches hier sowohl eine Innenwandung als auch eine untere und obere Abdeckung des Reinraums ausbildet, findet hier bevorzugt nur gegenüber der Außenwandung des Reinraums statt. Diese Außenwandung ist dabei vorteilhaft stationär angeordnet.

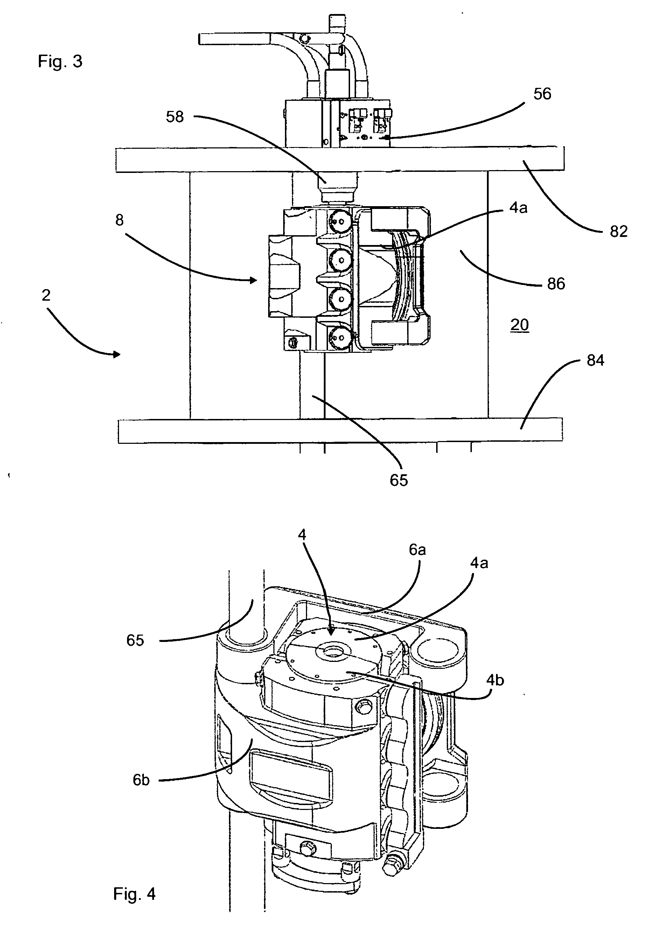

Figur 3 zeigt eine Darstellung einer an einem Träger 2 angeordneten Blasstation 8. Dieser Träger weist hier drei Wandungsbereiche 82, 84, 86 auf, die gleichzeitig auch die drehenden Teile einer Reinraumbegrenzung des Reinraums 20 ausbilden. Mittels einer Dichtungseinrichtung, wie beispielsweise einem Wasserschloss können diese beweglichen Teile 82, 84, 86 gegenüber einer beweglichen (Außen)-wand abgedichtet sein.

Das Bezugszeichen 56 kennzeichnet einen Ventilblock, der hier oberhalb der Wandung 82 angeordnet ist und das Bezugszeichen 58 eine Blasdüse, die auf den Kunststoffvorformling aufgesetzt werden kann, um diesen zu expandieren. Die Blasstation weist weiterhin einen Blasformträger auf, an dem ein Blasformteil (hier nur ein Blasformteil 4a gezeigt) angeordnet ist. Diese Blasformträger können mithilfe einer Schwenkwelle 65 gegeneinander verschwenkt werden, um so die Blasformen zu öffnen und zu schließen.

Figur 4 zeigt eine Darstellung einer Blasform 4, genauer zweier Blasformteile 4a, 4b, die jeweils an Blasformträgerteilen 6a, 6b angeordnet sind. Diese Blasformträgerteile können dabei hier mittels einer Schwenkwelle geschwenkt werden, um so die Blasform 4 zu öffnen oder zu schließen. Dabei ist es möglich, dass die Blasformteile 4a, 4b nicht unmittelbar an den Blasformträgerteilen 6a, 6b angeordnet sind, sondern an den Blasformträgerteilen 6a, 6b Trägerschalen angeordnet sind, an denen wiederum die Blasformteile 4a, 4b befestigt sind. Auch wäre es möglich, dass die Druckmittel vorgesehen sind, welche speziell für einen Sterilisationsvorgang einen Spalt zwischen den Blasformteilen 4a, 4b verkleinern können. Das Bezugszeichen 4 kennzeichnet die Blasform in ihrer Gesamtheit.

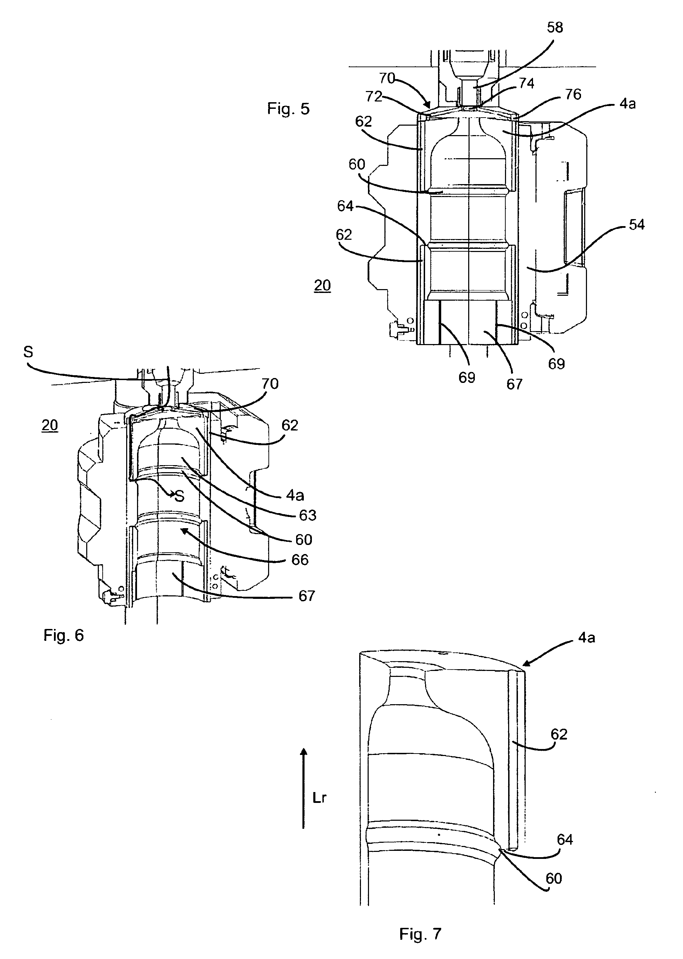

Figur 5 zeigt eine Schnittdarstellung einer erfindungsgemäßen Blasstation. Man erkennt hier ebenfalls wieder eine Blasform bzw. ein Blasformteil 4a, welches in einem Blasformträger 6a angeordnet ist. Das Bezugszeichen 60 kennzeichnet eine Bohrung, welche in dem Blasformteil 4a angeordnet ist, um während des Expansionsvorgangs Luft abzuführen. Das Bezugszeichen 67 kennzeichnet ein Bodenteil, welches die Blasform von unten her verschließt. Auch in diesem Bodenteil können Entlüftungskanäle 69 angeordnet sein. Auch diese Entlüftungskanäle 69 stehen in Strömungsverbindung mit dem Reinraum 20, der die Blasform umgibt.

Zur verbesserten Sterilisation der besagten Entlüftungsbohrungen in den Blasformen kann ein zusätzliches Element, wie hier eine sogenannte SIP-Kappe 70, vorgesehen sein. Durch ihre Gestaltung, welche hier die Kanäle 72, 74 und 76 umfasst, kann das Sterilisationsmittel den Blasformen zugeführt werden. So ist es möglich, dass ein Sterilisationsmittel über die Blasdüse 58 und die Kanäle 74, 72 und 76 direkt der Blasform zugeführt wird, genauer gesagt ein Kanalsystem 62, 64 und dass das Sterilisationsmittel von dort über die Bohrungen 60 in das Innere der Blasform austritt. Damit kann diese SIP-Kappe 70 durch ihre spezielle Gestaltung das durch die Blasdüse eingebrachte Sterilisationsmittel direkt in die Entlüftungsbohrungen der Blasformen leiten.

Es wäre weiterhin möglich, dass Dichtungseinrichtungen, wie O-Ringe vorgesehen sind, welche die Übergänge, beispielsweise zwischen dem Kanal 76 und dem Kanal 62 der Blasform 4 zusätzlich abdichten. Auf diese Weise wird eine gute Durchspülung der Bohrungen mit Sterilisationsmittel und somit eine gute Sterilisation ermöglicht. Es wären jedoch auch Ausführungsformen denkbar, bei denen auf die besagte SIP- oder CIP-Kappe verzichtet werden kann. Falls die Blasdüse direkt in den Innenraum der Blasformen 4a, 4b einbläst, wird ein Großteil der Sterilisationsmedien über einen Formspalt zwischen den beiden Formhälften entweichen, statt den Weg durch die Entlüftungsbohrungen zu wählen. Wie oben erwähnt, kann Abhilfe dadurch geschaffen werden, dass für die Sterilisation der Formspalt verringert wird.

Weiterhin wäre es auch möglich, das Sterilisationsmittel dadurch einzubringen, dass ein extra zu diesem Zweck bestimmtes Bauteil (zum Beispiel ein sogenannter CIP-Kolben) eingeführt wird. Dieser kann beweglich ausgeführt sein und zum Sterilisieren an das zu sterilisierende Bauteil andocken. Bei dem zu sterilisierende Bauteil kann es sich beispielsweise um die Blasformen handeln. Die eigentliche Sterilisation kann dann ähnlich erfolgen, wie oben beschrieben. Bevorzugt wird jedoch die Strömungsverbindung zum Sterilisieren des Reinraums und auch der Objekte und Bauteile durch den Blaskolben bzw. die Blasdüse hergestellt.

Bei einer weiteren Ausführungsform wäre es auch denkbar, dass zum Einleiten des Sterilisationsmediums vorhandene Blasventile genutzt werden. Dabei ist es besonders bevorzugt möglich, dass zum Einleiten des Sterilisationsmediums verwendete Ventile während des Sterilisationsvorgangs geöffnet bleiben. Es wäre jedoch auch denkbar, dass zum Einleiten des Sterilisationsmediums verwendete Ventile während des Sterilisationsvorgangs geschaltet werden, d.h. von einem geöffneten in einen geschlossenen Zustand und/oder umgekehrt.

Figur 6 zeigt eine weitere Darstellung einer erfindungsgemäßen Blasform, wobei hier auch ein Sterilisationspfad S für das Sterilisationsmedium erkennbar ist. Man erkennt, dass das Sterilisationsmedium in die Blasform durch einen vertikal verlaufenden Kanal 62 geführt wird und schließlich über die Öffnung 60 austritt. Dabei ist es möglich, dass der in Figur 4 gezeigte Kanal 72 umlaufend ausgebildet ist und auf diese Weise ein Einleiten In mehrere Kanäle 62 möglich ist. Im gewöhnlichen Arbeitsbetrieb ist die SIP-Kappe 70 nicht in Verbindung mit den Blasformen und auf diese Weise kann während des Expansionsvorgangs die Blasluft nach oben in den die Blasstation umgebenden Reinraum austreten. Das Bezugszeichen 66 kennzeichnet den durch die Blasform ausgebildeten (hier nur teilweise dargestellten) Hohlraum.

Figur 7 zeigt eine detaillierte Darstellung einer erfindungsgemäßen Blasform. Man erkennt, dass diese Blasform einen Kanal 62 aufweist, der eine Strömungsverbindung zwischen der Öffnung 60 und dem Reinraum 20 herstellt Dieser Kanal 62 erstreckt sich hier in vertikaler Richtung bzw. der Längsrichtung Lr der Blasform 4. Daneben Ist ein Verbindungskanal 64 vorgesehen, der die Öffnung 60 mit dem Kanal 62 verbindet. Vorteilhaft weist der Kanal 62 einen größeren Strömungsquerschnitt auf als der Verbindungskanal 64. Der Kanal 62 kann darüber hinaus mehrere derartiger Verbindungskanäle 64, die beispielsweise übereinander angeordnet sein können, aufnehmen. Es wäre dabei möglich, dass sich der Kanal 62 durchgehend entlang im Wesentlichen der gesamten Länge der Blasform 4 erstreckt, es wäre jedoch auch denkbar, dass zwei Kanäle 62 vorgesehen sind, von denen einer nach oben hin und einer nach unten hin geöffnet ist. Das Bezugszeichen 63 kennzeichnet eine Innenwandung der Blasform.

### Bezugszeichenliste

- 1: Umformungsvorrichtung
- 2: Transportrad
- 4: Blasform
- 4a, 4b: Blasformteile
- 5: Reckstange
- 6: Blasformträger
- 6a, 6b: Blasformträgerteile
- 8: Blas-/Umformungsstationen
- 9: Führungskurve
- 10: Kunststoffvorformlinge
- 10a: Behältnisse
- 11: Folgeeinrichtung
- 12: Schlitten
- 13: Boden
- 14: Faltenbalg
- 17: Deckel
- 18: weitere Wandung
- 19: Seitenwand
- 20: Reinraum
- 21: Halterung für Schlitten
- 22: Zuführeinrichtung
- 23: Halteeinrichtung
- 24: Abführeinrichtung
- 25: Dichtungseinrichtung
- 26: Träger
- 27: weitere Dichtungseinrichtung
- 28: Träger zum Tragen einer Bodenform
- 29: Haltekörper
- 30: Heizeinrichtung
- 31: Heizelemente
- 32: Sterilisationseinrichtung
- 34: Transporteinrichtung
- 36: Übergabeeinheit
- 37: Transportrad
- 40: Befüllungseinrichtung
- 42: Übergabeeinheit
- 44: Transporteinheit
- 50: Anlage zum Herstellen von Kunststoffbehältnissen
- 55: Sterilisationseinrichtung
- 56: Ventilblock
- 58: Blasdüse
- 60: Öffnung, Bohrung
- 62: Kanal
- 63: Innenwandung der Blasform
- 64: Verbindungskanal
- 65: Schwenkwelle
- 66: Hohlraum
- 67: Bodenteil
- 69: Entlüftungskanäle
- 70: Umleitelement SIP- Kappe
- 72, 74,76: Kanäle
- 82, 84, 86: durch den Träger ausgebildete Wandungen des Reinraums 20
- Lr: Längsrichtung der Blasform
- S: Sterilisationspfad
- U: unsterile Umgebung
- X: Schwenkachse
- Y: Bewegungsrichtung der Reckstange gegenüber dem Schlitten

## Patentansprüche

1. Vorrichtung (1) zum Umformen von Kunststoffvorformlingen (10) zu Kunststoffbehältnissen (10a) mit wenigstens einer Blasform (4) mit wenigstens zwei bezüglich einander bewegbaren Blasformteilen (4a, 4b), welche Blasform (4) einen Hohlraum ausbildet, innerhalb dessen die Kunststoffvorformlinge (10) zu den Kunststoffbehältnissen (10a) umformbar sind, mit einer Beaufschlagungseinrichtung (58), welche die Kunststoffvorformlinge (10) zu deren Expansion mit einem fließfähigen Medium beaufschlagt, mit einer Transporteinrichtung (2), welche die Blasform (4) entlang eines vorgegebenen Transportpfades transportiert und mit einem Reinraum (20), innerhalb dessen die Blasform (4) während der Expansion der Kunststoffvorformlinge (10) transportierbar ist, wobei die Blasform (4) an einer dem Kunststoffvorformling zugewandten Innenwandung wenigstens eine Öffnung (60) aufweist, durch die während des Expansionsvorgangs ein zweites fließfähiges Medium aus dem Hohlraum (66) abführbar ist,
**dadurch gekennzeichnet, dass**
eine Strömungsverbindung zwischen der Öffnung (60) und dem Reinraum (20) vorgesehen ist und diese Strömungsverbindung gegenüber einer unsterilen Umgebung des Reinraums (20) abgedichtet ist, derart, dass über die Öffnung das zweite fließfähige Medium ausschließlich In den Reinraum (20) abführbar ist.

2. Vorrichtung (1) nach Anspruch 1,
**dadurch gekennzeichnet, dass**
die Vorrichtung eine Zuführleitung aufweist, um der Blasform eine fließfähiges Sterilisationsmedium zuzuführen und wenigstens zeitweise eine Strömungsverbindung zwischen der Zuführleitung und der Öffnung (60) besteht.

3. Vorrichtung (1) nach Anspruch 2,
**dadurch gekennzeichnet, dass**
die Vorrichtung (1) eine Bevorratungseinrichtung zum Bevorraten des fließfähigen Sterilisationsmediums aufweist und diese Bevorratungseinrichtung wenigstens zeitweise in Strömungsverbindung mit der Öffnung (60) steht.

4. Vorrichtung nach wenigstens einem der vorangegangenen Ansprüche 2 - 3
**dadurch gekennzeichnet, dass**
die Strömungsverbindung abschnittsweise über die Beaufschlagungseinrichtung (58) vettäuft

5. Vorrichtung nach wenigstens einem der vorangegangen Ansprüche,
**dadurch gekennzeichnet, dass**
die Vorrichtung (1) ein gegenüber der Blasform (4) bewegliches Umleitelement (70) aufweist.

6. Vorrichtung nach Anspruch 1,
**dadurch gekennzeichnet, dass**
die Blasform (4) wenigstens einen Kanal (62) zum Leiten des zweiten fließfähigen Mediums und/oder des Sterilisationsmediums aufweist, der in Strömungsverbindung mit der Öffnung steht und der sich in einer Längsrichtung (Lr) der Blasform (4) erstreckt.

7. Blasform (4) zum Umformen von Kunststoffvorformlingen (10) zu Kunststoffbahältnissen (10a), wobei die Blasform (4) wenigstens ein erstes Blasformteil (4a) und ein zweites Blasformteile (4b) aufweist und die beiden Blasformteile (4a, 4b) bezüglich einander schwenkbar sind und die Blasformteile (4a, 4b) einen Hohlraum ausbilden, innerhalb dessen die Kunststoffvorformlinge (10) durch Beaufschlagung mit einem fließfähigen Medium zu den Kunststoffbehältnissen (10a) expandierbar sind und wobei in einer den Kunststoffvorformlingen (10) zugewandten Wandung (63) der Blasform (4) wenigstens eine Öffnung (60) vorgesehen ist, um während eines Expansionsvorgangs ein zweites fließfähiges Medium abzuführen,
**dadurch gekennzeichnet, dass**
die Öffnung (60) in Strömungsverbindung mit einem innerhalb einer Wandung der Blasform (4a, 4b) verlaufenden Kanal (62) steht und dieser Kanal (62) sich in einer Längsrichtung (Lr) der Blasform (4a, 4b) erstreckt.

8. Blasform nach Anspruch 7,
**dadurch gekennzeichnet, dass**
der Innerhalb der Wandung (61) verlaufende Kanal (62) über einen Verbindungskanal (64) mit der Öffnung (60) in Strömungsverbindung steht.

9. Verfahren zum Umformen von Kunststoffvorformlingen (10) zu Kunststoffbehältnissen (10a), wobei die Kunststoffvorformlinge (10) in einer Vielzahl von Blasformen (4) zu den Kunststoffbehältnissen (10a) umgeformt werden und die Blasformen (4) mittels einer Transporteinrichtung (2) zumindest teilweise während ihrer Expansion entlang eines vorgegebenen Transportpfades innerhalb eines Reinraums (20) transportiert werden und wobei wenigstens zeitweise während des Expansionsvorgangs ein erstes gasförmige Medium über eine in einer den Kunststoffvorformlingen (10) zugewandten Wandung (61) der Blasform (4) angeordnete Öffnung (60) abgeführt wird und wenigstens zeitweise während eines Sterilisationsvorgangs ein zweites fließfähige Medium über die den Kunststoffvorformlingen zugewandte Öffnung der Blasform zugeführt wird,
**dadurch gekennzeichnet, dass**
das zweite gasförmige Medium ausgehend von der Öffnung (60) ausschließlich in den Reinraum (20) gelangt.

## Claims

1. An apparatus (1) for the shaping of plastics material pre-forms (10) into plastics material containers (10a) with at least one blow mould (4) with at least two blow mould parts (4a, 4b) capable of being moved with respect to each other, which blow mould (4) forms a cavity inside which the plastics material pre-forms (10) are capable of being shaped into the plastics material containers (10a), with a stressing device (58) which acts upon the plastics material pre-forms (10) with a flowable medium for their expansion, with a conveying device (2) which conveys the blow mould (4) along a pre-set conveying path and with a clean room (20), inside which the blow mould (4) is capable of being conveyed during the expansion of the plastics material pre-forms (10), wherein an inner wall of the blow mould (4) facing the plastics material pre-form has at least one opening (60) through which a second flowable medium is capable of being removed out of the cavity (69) during the expansion procedure, **characterized in that** a flow connection is provided between the opening (60) and the clean room (20) and this flow connection is sealed off from a non-sterile environment of the clean room (20), in such a manner that the second flowable medium is capable of being removed exclusively into the clean room (20) by means of the opening.

2. An apparatus (1) according to claim 1, **characterized in that** the apparatus has a supply line in order to supply a flowable sterilization agent to the blow mould, and a flow connection is present at least for a time between the supply line and the opening (60).

3. An apparatus (1) according to claim 2, **characterized in that** the apparatus (1) has a storage device for storing the flowable sterilization agent, and this storage device is connected in terms of flow at least for a time to the opening (60).

4. An apparatus according to at least one of the preceding claims 2 to 3, **characterized in that** the flow connection extends in sections over the stressing device (58).

5. An apparatus according to at least one of the preceding claims, **characterized in that** the apparatus (1) has a by-pass element (70) which is movable with respect to the blow mould (4).

6. An apparatus according to claim 1, **characterized in that** the blow mould (4) has at least one duct (62) for conveying the second flowable medium and/or the sterilization medium, which duct is connected in terms of flow to the opening and which extends in a longitudinal direction (Lr) of the blow mould (4).

7. A blow mould (4) for shaping plastics material pre-forms (10) into plastics material containers (10a), wherein the blow mould (4) has at least one first blow mould part (4a) and one second blow mould part (4b) and the two blow mould parts (4a, 4b) are movable with respect to each other and the blow mould parts (4a, 4b) form a cavity inside which the plastics material pre-forms (10) are capable of being expanded to form the plastics material containers (10a) by being acted upon with a gaseous medium and wherein at least one opening (60) is provided in a wall (63) of the blow mould (4) facing the plastics material pre-forms (10) in order to remove a second gaseous medium during an expansion procedure, **characterized in that** the opening (60) is connected in terms of flow to a duct (62) extending inside a wall in the blow mould (4a, 4b) and this duct (62) extends in a longitudinal direction (Lr) of the blow mould (4a, 4b).

8. A blow mould according to claim 7, **characterized in that** the duct (62) extending inside the wall (61) is connected in terms of flow to the opening (60) by way of a connecting duct (64).

9. A method of shaping plastics material pre-forms (10) into plastics material containers (10a), wherein the plastics material pre-forms (10) are shaped in a plurality of blow moulds (4) to form the plastics material containers (10a) and the blow moulds (4) are conveyed along a pre-set conveying path inside a clean room (20) by means of a conveying device (2) at least in part during their expansion, and wherein a first gaseous medium is removed at least for a time during the expansion procedure by way of an opening (60) arranged in a wall (61) of the blow mould (4) facing the plastics material pre-forms (10) and/or a second flowable medium is supplied at least for a time during a sterilization procedure to the blow mould by way of the opening facing the plastics material pre-forms, **characterized in that**, starting from the opening (60), the second gaseous medium passes exclusively into the clean room (20).

## Revendications

1. Installation (1) pour la transformation de préformes en matière plastique (10) en récipients en matière plastique (10a), avec au moins un moule de soufflage (4) ayant au moins deux pièces (4a, 4b) de moule mobiles l'une par rapport à l'autre, ledit moule de soufflage (4) formant une cavité à l'intérieur de laquelle les préformes en matière plastique (10) sont transformables en récipients en matière plastique (10a), avec un dispositif d'application (58) appliquant un fluide sur les préformes en matière plastique (10) pour l'expansion de ceux-ci, avec un dispositif de transport (2) convoyant le moule de soufflage (4) le long d'un chemin de transport défini et avec un espace stérile (20) à l'intérieur duquel le moule de soufflage (4) est transportable pendant l'expansion des préformes en matière plastique (10), le moule de soufflage (4) présentant au moins une ouverture (60) sur une paroi intérieure opposée à la préforme en matière plastique, par laquelle un deuxième fluide peut être évacué de la cavité (66) lors du processus d'expansion,
**caractérisée en ce**
**qu'**une liaison d'écoulement est prévue entre l'ouverture (60) et l'espace stérile (20), et en ce que ladite liaison d'écoulement est rendue étanché par rapport à un environnement non stérile de l'espace stérile (20), de manière à permettre l'évacuation par l'ouverture du deuxième fluide exclusivement vers l'espace stérile (20).

2. Installation (1) selon la revendication 1,
**caractérisée en ce que**
ladite installation comprend une conduite d'amenée pour conduire un fluide de stérilisation vers le moule de soufflage, et **en ce qu'**une liaison d'écoulement est au moins temporairement présentée entre la conduite d'amenée et l'ouverture (60).

3. Installation (1) selon la revendication 2,
**caractérisée en ce que**
ladite installation (1) comprend un dispositif de stockage pour la stockage du fluide de stérilisation, et **en ce que** ledit dispositif de stockage est au moins temporairement en liaison d'écoulement avec l'ouverture (60).

4. Installation selon au moins une des revendications 2 et 3,
**caractérisée en ce que**
la liaison d'écoulement s'étend en sections par le dispositif d'application (58).

5. Installation selon au moins une des revendications précédentes, **caractérisée en ce que**
ladite installation (1) comporte un élément de déviation (70) mobile par rapport au moule de soufflage (4).

6. Installation selon la revendication 1,
**caractérisée en ce que**
le moule de soufflage (4) comprend au moins un canal (62) pour la conduction du deuxième fluide et/ou du fluide de stérilisation, lequel est en liaison d'écoulement avec l'ouverture et s'étend dans le sens de la longueur (Lr) du moule de soufflage (4).

7. Moule de soufflage (4) pour la transformation de préformes en matière plastique (10) en récipients en matière plastique (10a), ledit moule de soufflage (4) ayant au moins une première pièce (4a) de moule et une deuxième pièce (4b) de moule, les deux pièces (4a, 4b) de moule étant pivotantes l'une par rapport à l'autre, les pièces (4a, 4b) de moule formant une cavité à l'intérieur de laquelle les préformes en matière plastique (10) sont expansibles en récipients en matière plastique (10a) par application d'un fluide et au moins une ouverture (60) étant prévue dans une paroi (63) du moule de soufflage (4) opposée aux préformes en matière plastique (10) pour évacuer un deuxième fluide lors du processus d'expansion,
**caractérisé en ce que**
l'ouverture (60) est en liaison d'écoulement avec un canal (62) s'étendant dans une paroi du moule de soufflage (4a, 4b), et **en ce que** ledit canal (62) s'étend dans le sens de la longueur (Lr) du moule de soufflage (4a, 4b).

8. Moule de soufflage selon la revendication 7,
**caractérisé en ce que**
le canal (62) s'étendant à l'intérieur de la paroi (61) est en liaison d'écoulement avec l'ouverture (60) par l'intermédiaire d'un canal de liaison (64).

9. Procédé de transformation de préformes en matière plastique (10) en récipients en matière plastique (10a), les préformes en matière plastique (10) étant transformées en récipients en matière plastique (10a) dans une pluralité de moules de soufflage (4), les moules de soufflage (4) étant convoyés au moins en partie par un dispositif de transport (2) le long d'un chemin de transport défini à l'intérieur d'un espace stérile (20) pendant leur expansion, un premier fluide gazeux étant au moins temporairement évacué par une ouverture (60) ménagée dans une paroi (61) du moule de soufflage (4) opposée aux préformes en matière plastique (10) pendant le processus d'expansion et un deuxième fluide étant au moins temporairement amené par l'ouverture du moule de soufflage opposée aux préformes en matière plastique pendant un processus de stérilisation,
**caractérisé en ce que**
le deuxième fluide gazeux parvient exclusivement dans l'espace stérile (20) depuis l'ouverture (60).
